# EUROPEAN PATENT APPLICATION

(11) **EP 1 763 153 A2**
(43) Date of publication of application: **14.03.2007**
(21) Application number: 06015561.1
(22) Date of filing: 26.07.2006
(51) Int. Cl.: H04B 7/155

(54) **OFDM repeaters**

(30) Priority: 26.07.2005 GB 0515263
(71) Applicant: Ovus Ltd, Cambridge CB4 0PP (GB)
(72) Inventor: Sellars, Martin Roscoe, Cambridge CB4 0PP (GB); Farmer, Steven Paul, Cambridge CB4 0PP (GB); Sales, Mike, Cambridge CB4 0PP (GB)
(74) Representative: Martin, Philip John

(57) **Abstract**

This invention relates to apparatus, methods and computer code for OFDM (Orthogonal Frequency Division Multiplex) repeaters, in particular for domestic use.

An on-channel OFDM repeater comprising: an rf input for an rf band comprising a plurality of OFDM channels; one or more OFDM signal processing arms each having an input coupled to said rf input and an output and including an OFDM channel selection system, to select one or more of said OFDM channels for repeating; and an output, coupled to said one or more signal processing arm outputs, for re-transmitting said one or more selected OFDM channels.

## Description

This invention relates to apparatus, methods and computer code for OFDM (Orthogonal Frequency Division Multiplex) repeaters, in particular on-channel OFDM repeaters (which re-transmit on the same frequency as received) for in-building, for example domestic use. The invention further relates to methods of locally distributing a digital television signal.

Orthogonal frequency division multiplexing is a well known technique for transmitting high bit rate digital data signals such as digital television signals. Rather than modulate a single carrier with the high-speed data, the data is divided into a number of lower data rate channels each of which is transmitted on a separate sub-carrier. In OFDM the separate sub-carriers are spaced so that they overlap and the frequencies are chosen so that the sub-carriers are substantially mutually orthogonal so that the separate signals modulated onto the sub-carrier can be recovered at a receiver. For example the sub-carriers are orthogonal if they are spaced apart in frequency by an interval of 1/T, where T is the OFDM symbol period. An OFDM symbol can be obtained by performing an inverse Fourier transform on a set of input symbols. The input symbols can be recovered at a receiver by performing a Fourier transform which effectively multiplies an OFDM symbol by each sub-carrier and integrates over the OFDM symbol period (for a given sub-carrier the overlap with the other sub-carriers averaging to zero over the integration period). Various sub-carrier modulation schemes may be employed including, for example, QAM (Quadrature Amplitude Modulation), PAM (Pulse Amplitude Modulation), and PSK (Phase Shift Keying). To reduce the effects of multipath OFDM symbols are normally extended by a guard period at the start (or end) of each symbol - provided that the relative delay of two multipath components is smaller than this guard time interval, to a first approximation there is no inter-symbol interference.

In this specification we are particularly concerned with digital video broadcast (DVB) type signals, which include the ISDB (Integrated Services Digital Broadcasting) signals used in Japan. There are several variants of the DVB and ISDB systems including DVB-T (Terrestrial), DVB-H (Handheld - for broadcasting television to mobile devices) and ISDB-T (Terrestrial) but all these employ OFDM as the underlying signal transmission scheme.

In the UK an OFDM DVB channel occupies 8MHz, in Europe 7 or 8MHz, in the US and Japan 6MHz. This channel is sometimes referred to as a multiplex since, in general, a single such OFDM channel will carry a plurality of different services multiplexed within the overall data rate. A service typically comprises an audio-visual broadcast service such as a television channel, for example BBC1, ITV3, and the like. On each OFDM channel service information (SI) is provided which, among other things, identifies the services provided on the channel and generally provides information relating to these, for example, indicating geographical broadcast region variants (such as Anglia, Yorkshire, Thames London, and the like). For further details reference may be made *Digital Video Broadcasting (DVB): Specification for Service Information (SI) in DVB Systems,* ETSI Doc. EN 300 468 v1.3.1, February 1998; a similar standard is defined by the ATSC (Advanced Television Systems Committee) in the United States, *Program and System Information Protocol for Terrestrial Broadcast and Cable* (Revision A) with Amendment No. 1, ATSC Doc A/65A, May 2000.

In the UK there is a plan to switch over to purely digital television broadcasting in the medium term. However there is a potential difficulty with this in that for good reception a rooftop antenna is generally necessary whereas many smaller television sets in the UK have only set-top antennas. Similar problems are likely to be experienced in other countries.

According to the present invention there is therefore provided an OFDM repeater, in particular an on-channel repeater, preferably suitable for in-building or domestic use. The repeater comprises: an rf input for an rf band comprising a plurality of OFDM channels; one or more OFDM signal processing arms each having an input coupled to said rf input and an output and including an OFDM channel selection system, to select one or more of said OFDM channels for repeating; and an output, coupled to said one or more signal processing arm outputs, for re-transmitting said one or more selected OFDM channels.

Some features of preferred embodiments of the repeater are as follows: DVB-T: addresses the second third sets, currently using set-top aerials; if the main TV uses loft/external aerial. DVB-H: addresses in building coverage issues for mobiles.
Re-radiates digital TV signals inside the home: on the same frequency as originally received; without an accessible aerial; only the DTT signals - analogue and interferers suppressed. Avoids the need for one or more of: loft or pole mounted amplifiers /splitters; extra co-ax to fixed locations; professional installation; new aerials. Allows freedom of movement: for TVs, handhelds and COFDM devices; releases the main TV from the aerial socket. Simplicity: a standard STB can be used; existing or cheap antennae can be used.

In embodiments, by selectively re-transmitting OFDM channels feedback interference and related difficulties are ameliorated and, if necessary, existing analogue channels remain substantially unaffected. At the repeater the signal from the main, broadcast transmitter dominates and the feedback signal can be kept at a relatively low level, appearing as a 'post echo'. At a second TV receiver in a house equipped with the repeater the signal from the main broadcast transmitter appears, to a set-top aerial, at a low level whilst the re-transmitted OFDM channel or channels are present at a higher level and it is these, therefore, that the second receiver (TV) locks to (the main transmitter appearing as a pre-echo).

Typically the rf input is in the VHF or UHF frequency band and may include a low noise amplification stage, for example using a high electron mobility transistor (HEMT). Preferably the selection system for a signal processing arm comprises an up-converter and a down-coverter with a filter in between. Typically the up-and down-converter each comprise a mixer in association with a local oscillator, and it is strongly preferable that these local oscillators are referenced to a common (frequency) source to ensure that the frequency on which a selected OFDM channel is re-transmitted is the same of that of which it is received. This allows the main broadcast signal to be treated as an echo of the repeated signal - otherwise a local receiver will see two transmitters at slightly different frequencies. Preferably the up-and-down converters in each signal processing arm are all locked to the same common reference frequency oscillator; the local oscillators may comprise digital frequency synthesisers.

Preferably each signal processing arm includes an image reject filter following the up-and-down converters. Preferably, therefore, the up-converter precedes the down-converter in the signal path as this makes the image reject filtering easier. For example a typical OFDM intermediate frequency (IF) is 36MHz, which implies a potentially in-band image at 72MHz if downconversion to 36MHz is followed by filtering and then upconversion back to the original frequency. By contrast if upconversion to; say, 1.2GHz is performed prior to filtering and subsequent down conversion the image reject filtering is much easier to perform. However, in embodiments which incorporate an OFDM demodulator (see later) separate downconversion to a 36MHz IF signal may be needed.

Preferably the filter between the up-converter and down-converter comprises a SAW (Surface Acoustic Wave) filter. This has the advantage of providing a significant time delay, for example in the range 1µs to 10µs between the input signal and the re-transmitted signal (some of which feeds back to the input). The time delay limits the rate of change of the level of the feedback echo, for example to 500KHz for a 2µs SAW delay, which facilitates control of the re-transmitted signal for feedback reduction, as described later. Although the SAW filter adds some delay, this is not seen as multipath provided that the delay is no longer than the OFDM signal guard band interval.

Preferably the repeater includes a feedback reduction system comprising a (re-transmitted) output power control system. This may take the form of a variable gain device (amplifier and/or tenuator) in each signal processing arm controlled by a system which monitors the level of feedback for the OFDM channel selected by each respective processing arm.

The level of feedback may be determined by demodulating a selected OFDM channel since a by-product of the demodulation process is an OFDM channel estimate. The Sony CXD1976R is an example of an OFDM demodulator chip which makes this channel estimate available. For example a typical DVB OFDM channel has around 2000 sub-carriers amongst which are a number of pilot tones. The demodulator locks to these pilot tones and derives an OFDM channel estimate from these which is then used in demodulating the data. An inverse (fast) Fourier transform of this channel estimate yields a channel impulse response for the OFDM channel. This impulse response has peaks at time positions corresponding to the main, broadcast signal and to the re-transmitted signal(s). The strongest signal at the repeater input is from the main, broadcast transmitter and the feedback echo appears at a SAW filter delay later and, in embodiments, this knowledge can be used to help identify the feedback signal.

The gain of a signal processing arm processing a selected OFDM channel can be adjusted in a number of different ways to control the feedback. For example the gain can be reduced if the feedback signal is greater than a threshold level (absolute or as a percentage of the main transmitter signal), but preferably the system determines a change in the feedback echo level and reduces the gain if this change is greater than a (positive) threshold. This change in echo level can be used, for example, to determine feedback signal level swelling, which is a useful parameter in feedback control.
Broadly, COFDM demodulation can be used to monitor and correct for echoes.

Additionally or alternatively to looking for an echo at the (SAW) filter delay a slow amplitude variation can be imposed upon a re-transmitted signal, for example in the range 1dB to 5dB, and this variation can then be used to help identify which of potentially many echoes is feedback from the repeater output.

Preferably the repeater is configured to fail-safe, for example by including power supply current limiting and/or output (power) amplifier monitoring. The variable gain devices may also be configured to shut-down (that is, increase their attenuation) if not repeatedly addressed, for example by means of a "leaky capacitor" type arrangement.

In preferred embodiments, as previously mentioned, the repeater includes an OFDM demodulator coupled (in preferred embodiments, selectively) to the one or more signal processing arms to demodulate a said selected OFDM channel, and a controller coupled to the OFDM demodulator to control the one or more signal processing arms in response to data from the demodulator. This configuration provides a number of advantages. Broadly speaking the data from the demodulator may comprise one or more of OFDM channel quality data (for example a signal-to-noise ratio value), service name data for a channel (such as 'BBC1', for example from a service information service description table), and service (geographical) region data (for example service injection point data from a network information table of the service information). As previously mentioned channel estimate data may also be provided and used to determine a channel impulse response for controlling feedback. Although the OFDM demodulator is preferably selectively coupled to a filter output of a signal processing arm in alternative embodiments a separate signal processing arm (in effect a receiver front-end) may be provided for the demodulator.

Additionally or alternatively to feedback control the controller may be employed to select one or more of the OFDM channels based upon signal strength/quality, for example to pick out the best signals, and/or based upon the content of a channel multiplex, that is on the service information. For example, the controller may exclude from selection OFDM channels with a signal-to-noise ratio (SNR) less than a threshold level, and may then optionally select one or more channels based upon service identification data to, say, automatically select a service (such as ITV) for a particular or consistent geographical region where there is a choice. Where many services are available a desired list of services may be stored in non-volatile memory and used to preferentially select OFDM channels (carrying these services) for re-transmission.

In embodiments the controller comprises a microprocessor under control of computer program code stored in non-volatile memory such as Flash RAM or ROM.

In embodiments the OFDM repeater has a plurality of OFDM signal processing arms for re-transmitting a plurality of selected OFDM channels, for example at present in the UK it is useful to be able to select six channels for re-transmission.

In preferred embodiments for domestic use the OFDM repeater is provided with an enclosure which lacks an external output connection and instead re-transmits by means of an internal loop or PCB/Patch antenna. This helps to reduce any risk that the repeater could be unlawfully used for TV transmission.

Thus the invention also provides an OFDM repeater for domestic use, the repeater comprising an enclosure with a transmit antenna, an OFDM signal retransmitter having an rf input and an output coupled to said transmit antenna, to re-transmit from said transmit antenna an OFDM signal received at said rf input; wherein said transmit antenna is internal to said enclosure and wherein said re-transmitter output is substantially directly electrically inaccessible from outside said enclosure.

The invention further provides a method of repeating an OFDM signals comprising a plurality of OFDM channels, on OFDM channel carrying data for one or more services and corresponding service information, the method comprising: inputting rf signals over a band comprising a plurality of said OFDM channels; selecting one or more of said OFDM channels to re-transmit responsive to data relating to the one or more channels; and re-transmitting the selected one or more channels.

The invention also provides a carrier carrying processor control code for controlling a processor of an OFDM repeater, said OFDM repeater including at least one OFDM channel selector controllable by said processor, an OFDM channel carrying data for one or more services and corresponding service information, the control code comprising code to: read said service information; select one or more of said OFDM channels to re-transmit responsive to said service information; and control said OFDM channel selector to select said one or more OFDM channels for transmission.

The invention further provides processor control code to implement the above-described feedback control systems and methods and channel selection systems and methods, in particular on a data carrier such as a disk, CD- or DVD-ROM, programmed memory such as read-only memory (Firmware), or on a data carrier such as an optical or electrical signal carrier. Code (and/or data) to implement embodiments of the invention may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language such as Verilog (Trade Mark) or VHDL (Very high speed integrated circuit Hardware Description Language). As the skilled person will appreciate such code and/or data may be distributed between a plurality of coupled components in communication with one another.

These and other aspects of the invention will now be further described, by way of example only, with reference to the accompanying figures in which:
Figures 1a and 1b show, respectively, a domestic OFDM repeater and a block diagram of an OFDM repeater system according to an embodiment of the present invention; and
Figure 2 shows a COFDM tuner and re-radiator block for the system of Figure 1

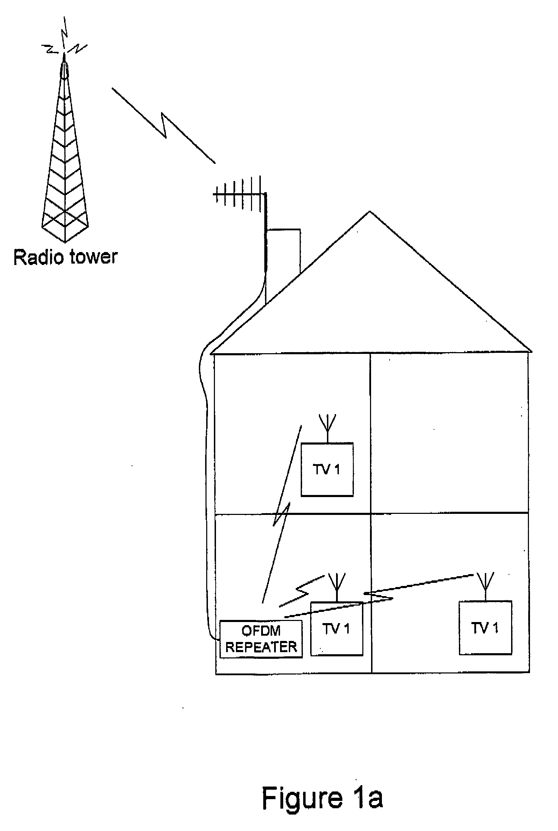

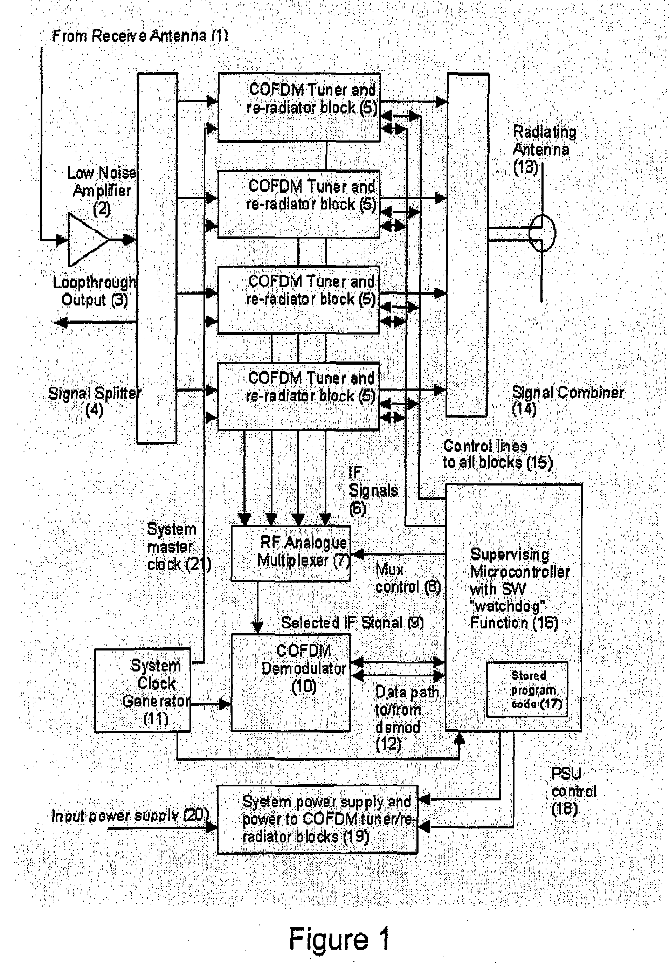

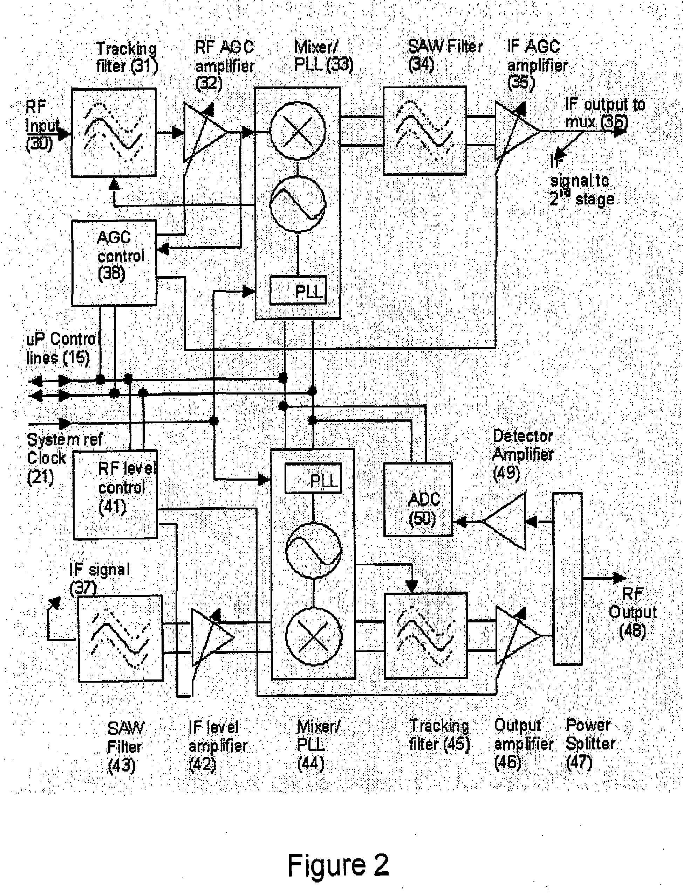

Figures 1 and 2 provide a simplified overview of a complete system according to an embodiment of the present invention (in Figure 1b only four tuner/re-radiator blocks are shown for clarity).

Referring to Figure 1b, the RF signal from the receive antenna (1) is passed through a Low Noise Amplifier (LNA) (2) to raise the signal levels sufficiently to allow splitting into a number of paths by the Signal Splitter (4). At this point the input signal is broadband and contains many unwanted signals such as analogue TV and radio signals. A broadband loop through output (3) is (optionally) provided to allow the main antenna signal to be passed to fixed existing equipment such as, for example, an analogue VCR or digital radio, or for local use if the equipment is installed in close proximity to existing equipment. After splitting, the signals are passed to a number (one per COFDM multiplex, four are shown in Figure 1, but there may be more or less in the equipment) of COFDM Tuner and Re-radiator blocks (5) which are described in the next paragraph. Each block has an RF output which is combined with the others in the signal combiner (14) and passed to the integral Radiating Antenna (13). Each block also has an IF output (6), nominally at 36MHz, an input for the system master clock (21), and bidirectional control ports. The IF signals (6) are selected in an Analogue Multiplexer (7), allowing a single COFDM Demodulator (10) to sequentially access all of the incoming IF signals.

This permits the supervising microcontroller (16) to receive, via the COFDM tuner and demodulator blocks (5), the full required range of RF signals present at the receive antenna (1), identify and acquire signal type and quality data from individual signals, and apply a selection process to choose only those suitable for re-radiation. Selected signals are then programmed, via the control lines (15), into the COFDM tuner and demodulator blocks for further processing and any unwanted signals, such as those carrying analogue services or corrupted digital signals, can be discarded. The control lines to each Tuner/Re-radiator block (15) are then used to monitor and control the transmit powers of each channel independently, allowing the system to closely control the level of the signals emitted from the radiating antenna (13), under control of the embedded Stored Program Code (17). A "watchdog" system is implemented in the supervising microcontroller (16) to prevent possible misoperation of the system due to program faults, and the main system power supplies (19) are also monitored via the PSU control signals (18) for out of limits faults, and may be switched off if such a fault occurs.

Moving to the Tuner/Re-radiator blocks themselves, a simplified block diagram is given in Figure 2. This describes an architecture based on single conversion techniques, in which the RF signals are converted from and back to the UHF spectrum in a single stage. Other techniques are available here; in particular double conversion techniques which may have certain advantages, but suffer form a higher level of complexity. The upper part of Figure 2 is a fairly conventional tuner design, such as would be found in a TV set or VCR. Since it is a single conversion design, a Tracking Filter (31) is required after the RF input (30) to suppress image responses. The tuner uses a two stage AGC strategy in which a local analogue loop, consisting of the RF AGC amplifier (32) and AGC control (3 8), is used to control the RF power entering the mixer (33), and a second loop controls the power of the IF signal (36) using digital control techniques. Conventional SAW filters (34, 43) are used to limit the response of the tuner to a wanted signal in a single UHF channel. The SAW (Surface Acoustical Wave) filters (34,43) also introduce a short (of the order of 1 µsecond each) delay in the signal path. The IF output of the tuner stage (36) is split, and one signal fed to the IF output (6) mentioned in the previous paragraph, and also to the input of the re-radiator section (37). A second SAW filter (43) is provided to increase both the channel selectivity and the delay, the signal level is closely controlled by a variable gain amplifier (42). This allows the up convert mixer (44) to operate at optimum levels to minimise spurious outputs. The up converted output is passed through a tracking filter (45) to suppress images on the output signal, and fed to a broadband variable gain amplifier (46). The signal output is split inside the re radiator block by a power splitter (47), and a fraction of the signal is detected and amplified (49) before being passed to an Analogue to Digital converter (50). This allows the power of the RF output (48) to be closely monitored on a channel by channel basis, allowing a variety of strategies to be implemented to achieve optimum performance without risk of causing unwanted interference.

Further points to note are that (preferably) all up conversions and down conversions are carried out using the same system reference clock (21). This allows the conversions to be arranged so that inaccuracies in the system clock are cancelled, ensuring that the accuracy of the re-radiated signal is determined by the original transmission. All the functional blocks are under full monitoring and control by the system microcontroller (16) via control signals (15,8,18).

No doubt many other effective alternatives will occur to the skilled person. It will be understood that the invention is not limited to the described embodiments and encompasses modifications apparent to those skilled in the art lying within the spirit and scope of the claims appended hereto.

## Claims

1. An OFDM repeater comprising:
an rf input for an rf band comprising a plurality of OFDM channels;
one or more OFDM signal processing arms each having an input coupled to said rf input and an output and including an OFDM channel selection system, to select one or more of said OFDM channels for repeating; and
an output, coupled to said one or more signal processing arm outputs, for re-transmitting said one or more selected OFDM channels.

2. An OFDM repeater as claimed in claim 1 wherein said selection system comprises an upconverter and downconverter coupled between a said processing arm input and output and a filter coupled between said upconverter and said downcoverter; wherein each of said upconverter and said downconverter includes a mixer; and wherein said upconverter mixer and said downconverter mixer receive respective local oscillator signals referenced to a common source.

3. An OFDM repeater as claimed in claim 2 wherein each of said upconverter and said downconverter include a respective frequency synthesiser, and wherein said common source comprises a reference oscillator for said respective frequency synthesisers.

4. An OFDM repeater as claimed in claim 2 or 3 wherein said upconverter is coupled to a said signal processing arm input, and wherein said downconverter is coupled to a said signal processing arm output.

5. An OFDM repeater as claimed in claim 2, 3 or 4 wherein said filter comprises a SAW filter, to provide a delay to limit a rate of change of feedback echo.

6. An OFDM repeater as claimed in any preceding claim further comprising an output power control system for feedback reduction, and wherein, in operation, said repeater is controlled such that said feedback signal appears as a post-echo.

7. An OFDM repeater as claimed in claim 6 wherein said output power control system comprises:
a variable gain device for each said signal processing arm to control a power level of said one or more OFDM channels re-transmitted from said output; and
a system to determine a level of feedback of said one or more re-transmitted OFDM channels to said rf input and to adjust a gain of said variable gain device responsive to said determination.

8. An OFDM repeater as claimed in claim 7 wherein said system to determine a level of feedback of said one or more re-transmitted channels includes a system to determine a channel impulse response for a selected said OFDM channel.

9. An OFDM repeater as claimed in any preceding claim further comprising an OFDM demodulator coupled to said one or more signal processing arms, and a controller coupled to said OFDM demodulator to control said one or more signal processing arms responsive to data from said demodulator.

10. An OFDM repeater as claimed in claim 9 wherein said data includes channel estimate data for an OFDM channel, and wherein said controller is configured to control a said signal processing arm to reduce feedback of said re-transmitted signal to said rf input responsive to said channel estimate data.

11. An OFDM repeater as claimed in claim 9 or 10 wherein said data includes signal quality data for an OFDM channel, and wherein said controller is configured to control selection of a said OFDM channel responsive to said signal quality data.

12. An OFDM repeater as claimed in claim 9, 10 or 11 wherein a said OFDM channel carries multiplexed data for one or more services, wherein said data from said demodulator includes data identifying said one or more services for an OFDM channel, and wherein said controller is configured to control selection of said one or more OFDM channel responsive to said service identification data.

13. An OFDM repeater as claimed in claim 12 wherein said service identification data includes region data identifying a geographical region associated with a service, and wherein said controller is configured to select said one or more OFDM channels with the aim of preferentially re-transmitting one or more of said OFDM channels carrying services for a consistent region.

14. An OFDM repeater as claimed in claim 12 or 13 further comprising a data store to store data identifying a desired set of services, and wherein said controller is configured to identify one or more OFDM channels to select by using said service identification data to identify services in said desired set.

15. An OFDM repeater as claimed in any preceding claim comprising a plurality of said OFDM signal processing arms coupled between said rf input and said output, for re-transmitting a plurality of selected said OFDM channels.

16. An OFDM repeater as claimed in claim 15 when dependent upon claim 9 further comprising a signal selector to selectively couple said OFDM demodulator to a said signal processing arm.

17. An OFDM repeater as claimed in any preceding claim further comprising an enclosure with an internal antenna coupled to said output, and wherein said output lacks an external output connection.

18. A method of repeating an OFDM signal comprising a plurality of OFDM channels, an OFDM channel carrying data for one or more services and corresponding service information, the method comprising:
inputting rf signals over a band comprising a plurality of said OFDM channels;
selecting one or more of said OFDM channels to re-transmit responsive to data relating to the one or more channels; and
re-transmitting the selected one or more channels.

19. A method as claimed in claim 18 wherein said data comprises service information identifying one or more services carried by a said OFDM channel.

20. A method as claimed in claim 18 or 19 wherein said data includes signal quality data for a channel.

21. A method of distributing a digital video signal, the method comprising repeating an OFDM channel as claimed in claim 18, 19 or 20 such that feedback appears as a post-echo.

22. A carrier carrying processor control code for controlling a processor of an OFDM repeater, said OFDM repeater including at least one OFDM channel selector controllable by said processor, an OFDM channel carrying data for one or more services and corresponding service information, the control code comprising code to:
read said service information;
select one or more of said OFDM channels to re-transmit responsive to said service information; and
control said OFDM channel selector to select said one or more OFDM channels for transmission,

23. An OFDM repeater including the processor, OFDM channel selector and carrier of claim 22,

24. An OFDM repeater as claimed in any one of claims 1 to 16 for domestic use the repeater comprising an enclosure with a transmit antenna, an OFDM signal re-transmitter having an rf input and an output coupled to said transmit antenna, to re-transmit from said transmit antenna an OFDM signal received at said rf input; wherein said transmit antenna is internal to said enclosure and wherein said re-transmitter output is substantially directly electrically inaccessible from outside said enclosure.

25. An OFDM repeater, method or carrier as claimed in any preceding claim wherein said OFDM signal comprises a DVB-type signal.
